# EUROPÄISCHE PATENTSCHRIFT

(11) **EP 3 480 826 B1**
(45) Veröffentlichungstag und Bekanntmachung des Hinweises auf die Patenterteilung: **09.03.2022**
(21) Anmeldenummer: 18203449.6
(22) Anmeldetag: 30.10.2018
(51) Int. Cl.: G21G 1/02, G21G 1/00, G21C 23/00, G21C 19/32, F16K 11/085

(54) **VENTILBLOCK FÜR EIN FESTKÖRPERFÜHRENDES LEITUNGSSYSTEM UND VERTEILERLEITUNGSSYSTEM**
VALVE BLOCK FOR A SOLID BODY CONVEYING LEAD SYSTEM AND DISTRIBUTOR CONDUIT SYSTEM
BLOC DE SOUPAPE POUR UN SYSTÈME DE CONDUITES CONDUISANT UN CORPS SOLIDE ET SYSTÈME DE DISTRIBUTION

(30) Priorität: 02.11.2017 DE 102017125606
(43) Veröffentlichungstag der Anmeldung: 08.05.2019
(73) Patentinhaber: PFEIFFER CHEMIE-ARMATURENBAU GmbH, 47906 Kempen (DE); Kernkraftwerk Gösgen-Däniken AG, 4658 Däniken (CH)
(72) Erfinder: Miertz, Marcus, 47669 Wachtendonk (DE); Miertz, Michael, 40239 Düsseldorf (DE); Riegler, Bernd, 51467 Bergisch-Gladbach (DE); Ornot, Leo, 5036 Oberentfelden (CH); Bitterli, Beat, 5742 Kölliken (CH); Kaulbarsch, Rainer, 5200 Brugg (CH); Conus, Lucien, 4656 Starrkirch-Will (CH)
(74) Vertreter: Schmid, Nils T.F.

(56) Entgegenhaltungen:
- EP-A1- 3 106 200
- DE-A1- 3 644 213
- DE-A1-102010 024 871
- DE-U1-202010 011 413
- GB-A- 2 138 110

## Beschreibung

Die Erfindung betrifft einen Ventilblock für ein festkörperführendes Leitungssystem einer prozesstechnischen Anlage, wie beispielsweise einem Kernkraftwerk. Die Erfindung betrifft auch ein Verteilerleitungssystem für eine prozesstechnische Anlage, wie ein Kernkraft, insbesondere zum Ernten von Radionukliden.

Radionuklide finden Anwendung in vielen Bereichen der Technik und Medizin, insbesondere in der Nuklearmedizin. Zur Erzeugung von Radionukliden werden typischerweise entsprechend geeignete stabile Nuklide mit Neutronen bestrahlt. Hierdurch entstehen durch Neutroneneinfang instabile Nuklide, die sich unter Aussendung von Alpha-, Beta, Gamma- oder Protonenstrahlung über radioaktive Zerfallsreihen wieder in stabile Nuklide umwandeln. Die Bestrahlung mit Neutronen, auch Nuklidaktivierung genannt, erfolgt zumeist in Forschungsreaktoren, die jedoch für die Massenproduktion von Radionukliden hinsichtlich ihrer Kapazität zumeist beschränkt sind. Alternativ wurde vorgeschlagen, kommerzielle, für die Energiegewinnung genutzte Kernreaktoren als Neutronenquelle für die Radionuklid-Produktion zu verwenden. Hierzu ist es angedacht, sogenannte Nuklidaktivierungs-Targets in einen oder mehrere Instrumentationsfinger eines kommerziellen Kernreaktors einzubringen, um dort durch die von den Kernbrennstäben emittierte Strahlung aktiviert zu werden.

Eine Vorrichtung und ein Verfahren zum Einbringen und Entnehmen von Nuklidaktivierungs-Targets in bzw. aus einem Kernreaktor ist beispielsweise bekannt von US 2013/0170927 A1. Demnach soll zwischen einem einzelnen Instrumentationsfinger in dem Reaktorkern und einemreaktorkernfern angeordneten Target-Reservoir und Radionuklid-Erntebehälter eine Beladungs-Abzweigung vorgesehen sein, um von dem Instrumentationsfinger innerhalb des Reaktorkerns einen Pfad entweder zu dem Target-Reservoir oder dem Erntebehälter bereitzustellen. Die wahlweise Freigabe entweder des einen oder des anderen Pfades soll durch die Stellung eines Stößels bezüglich einer 90°-T-Kreuzung einstellbar sein. Bei der bekannten Vorrichtung hat es sich als problematisch herausgestellt, dass an dieser Beladekreuzung regelmäßig Beschädigungen der relativ spröden Targets eintreten, so dass weniger Material geerntet werden kann und das Verteilerleitungssystem durch Abrieb bzw. Bruchstücke der Targets verschmutzt. Ferner ist die bekannte Vorrichtung für das Ernten von Nuklidaktivierungs-Targets nicht ökonomisch sinnvoll einsetzbar, da die Vorrichtung sehr groß ist und der verfügbare Platz innerhalb des Kontaminationsbereichs des Reaktorgebäudes begrenzt ist. Ein weiteres Problem der bekannten Vorrichtung beim Einsatz in bestehenden Reaktoren liegt darin, dass die Gebäudestatik des bestehenden Reaktorgebäudes nur in sehr begrenztem Umfang zur Aufnahme von zusätzlichen Vorrichtungen geeignet ist. Bei einem Reaktor, dessen Reaktorkern mit 10 bis 50 Instrumentationsfingern ausgestattet sein kann, ist es mit den bekannten Vorrichtungen allenfalls möglich, einen sehr geringe Anteil der vorhandenen Instrumentationsfinger mit dem bekannten System zum Ernten von Nuklidaktivierungs-Targets einzurichten.

Die zur Aufnahme der Targets verwendeten Instrumentationsfinger sind in aller Regel bereits vorhandene Röhren, die innerhalb des Reaktorkerns parallel zu den Kernbrennstäben verlaufen und zumeist Teil eines sogenannten Kugel- oder Kugelschussmesssystems zur Bestimmung der Leistungsdichteverteilung im Reaktorkern sind. In einem solchen System werden Messkugeln mit aktivierbarer Materie, beispielsweise aus Vanadium, zwecks Bestrahlung in die Instrumentationsfinger des Reaktorkerns eingefüllt. Aufgrund ihres im Vergleich zum Instrumentationsfinger nur geringfügig kleineren Durchmessers liegen die Kugeln in den Fingern kettenartig unmittelbar an- bzw. aufeinander. Die Kugeln werden durch die emittierte Strahlung der Kernbrennstäbe aktiviert und nach einer vorbestimmten Verweildauer über ein Leitungssystem aus dem Reaktorkernbereich in eine Messeinrichtung, den sogenannten Messtisch, zwecks Bestimmung ihrer Aktivität transportiert. Das Leitungssystem inklusive Instrumentationsfinger ist in sich geschlossen und weist einen Durchmesser im Bereich des Kugeldurchmessers auf, so dass die Reihenfolge der Kugelkette im Instrumentationsfinger beim Transfer auf den Messtisch erhalten bleibt. Auf diese Weise können die Kugeln in der Kette einer jeweiligen Längsposition der Kernbrennstäbe zugeordnet werden, was wiederum Rückschlüsse auf die axiale Leistungsdichteverteilung des Neutronenflusses im Reaktorkern erlaubt. Ein derartiges Messsystem, auch Kugelmesssystem oder Kugelschussmesssystem genannt, mit Messvorrichtung und entsprechendem Leitungssystem ist beispielsweise aus US 3 711 714 bekannt. Die über die Kugelmessung gewonnenen Erkenntnisse dienen der Reaktorsicherheit und sind daher zumeist in regelmäßigen Zeitabständen zwingend vorgeschrieben. Grundsätzlich sind auch andere Messsysteme mit Instrumentationsfingern und entsprechenden Messkörpern bekannt, die zum Messen anderer Parameter dienen, welche die Eigenschaften der Brennstäbe und die Verhältnisse im Inneren des Reaktorkerns charakterisieren.

Während die Messkörper zur Bestimmung einer spezifischen Eigenschaft der Brennstäbe oder der Verhältnisse im Inneren des Reaktorkerns, etwa zur Bestimmung der Leistungsdichteverteilung, jeden Monat nur wenige Minuten im Instrumentationsfinger verweilen, sind für eine ausreichende Nuklidaktivierung der Targets Verweildauern von mehreren Tagen oder Wochen nötig. Während dieser Zeit stehen bei den bisher vorgeschlagenen Nuklidaktivierungssystemen die für die Radionuklidproduktion verwendeten Instrumentationsfinger für eine Messung nicht zur Verfügung. Zudem erfordern die bisher vorgeschlagenen Nuklidaktivierungssysteme ein aufwändiges manuelles Ab- und Umkoppeln des jeweiligen Instrumentationsfingers vom Messsystem an das Nuklidaktivierungssystem und wieder zurück. Ein Wechsel zwischen Nuklidaktivierung und Messung ist nur mit erhöhtem technischen Aufwand möglich und erzeugt beim Ab- und Umkoppeln zusätzliches Kontaminationsrisiko.

DE 20 2010 011 413 betrifft ein molchbares Mehrwegventil sowie einen vollmolchbaren Verteiler. DE 10 2010024 871 A1 offenbart ein molchbares Mehrwegventil sowie einen vollmolchbaren Verteiler. GB2138110A betrifft Verbesserungen bezüglich Steuerventilen.

Es ist eine Aufgabe der Erfindung, die Nachteile des Standes der Technik zu überwinden, insbesondere einen Ventilblock und ein Verteilerleitungssystem bereitzustellen, das nur geringen Bauraum und geringes Baugewicht bedarf und eine besonders wirtschaftliche Erntevorrichtung für Radionuklid-Targets bei gleichzeitig geringstmöglichem Kontaminationsrisikos bereitstellt.

Diese Aufgabe ist gelöst durch die Gegenstände der Ansprüche 1 und 7.

Demnach ist ein Ventilblock für ein festkörperführendes Leitungssystem einer prozesstechnischen Anlage vorgesehen. Der Ventilblock umfasst wenigstens zwei Rotationsstellventile. Die Rotationsstellventile des Ventilblocks weisen je wenigstens einen Leitungseingang und je wenigstens einen Leitungsausgang auf, sowie je ein drehbares Stellglied mit wenigstens einem Durchgangskanal. Das Stellglied mit dem wenigstens einen Durchgangskanal ist zwischen dem Leitungseingang und dem Leitungsausgang angeordnet, um den Leitungseingang mit dem Leitungsausgang zu verbinden oder um eine Trennung zwischen dem Leitungseingang und dem Leitungsausgang zu bewirken. In einer Öffnungsstellung des Stellgliedes sind der Leitungseingang und der Leitungsausgang durch den Durchgangskanal verbunden. In der Öffnungsstellung können sich von dem Leitungssystem geführte Medien, wie Festkörper, Molche, Fluide, wie Förderfluide, beispielsweise Pneumatikfluide, insbesondere Stickstoff, von dem Leitungsausgang in den Durchgangskanal, durch den Durchgangskanal, und aus dem Durchgangskanal in den Leitungsausgang bewegen. In einer Schließstellung des Ventilblocks trennt das Stellglied den Leitungseingang von dem Leitungsausgang. In der Schließstellung verhindert das Stellglied, dass das in dem Leitungssystem geführte Medium, wie ein Festköper, ein Molch, oder ein Fluid, wie ein Förderfluid, beispielsweise Stickstoff, von dem Leitungseingang zu dem Leitungsausgang übergeht. In der Schließstellung bildet das Stellglied eine festkörperdichte und/oder fluiddichte, insbesondere gasdichte, Trennung zwischen dem Leitungseingang und dem Leitungsausgang des Ventilkörpers aus.

In dem Ventilblock sind die wenigstens zwei Rotationsstellventile um dieselbe Rotationsachse drehbar und die Stellglieder der wenigstens zwei Rotationsstellventile sind drehfest miteinander verbunden. Wenn eines der Rotationsstellventile des Ventilblocks um einen Stellwinkel, beispielsweise 10°, 30°, 45° oder 90°, rotiert, rotiert auch das zweite sowie eventuelle weitere Rotationsstellventile des Ventilblocks mit demselben Drehsinn um denselben Stellwinkel. Dabei ist der wenigstens eine (erste) Durchgangskanal des ersten Rotationsstellventils relativ zu dem (ersten) Durchgangskanal des zweiten Rotationsstellventils in Axialrichtung bezüglich der Rotationsachse zueinander versetzt. Bei einem Ventilblock, der drei Rotationsstellventile, vier Rotationsstellventile oder noch mehr Rotationsstellventile umfasst, kann der jeweilige Durchgangskanal bzw. können die jeweiligen Durchgangskanäle der einzelnen Rotationsstellventile zu dem Durchgangskanal bzw. den Durchgangskanälen der übrigen Rotationsstellventile ebenfalls in Axialrichtung versetzt sein. Beispielsweise kann ein erstes Rotationsstellventil mehrere in einer Ebene angeordnete Durchgangskanäle aufweisen und ein zweites Rotationsstellventil kann mehrere Durchgangskanäle in einer zweiten Ebene aufweisen, wobei die Durchgangskanalebenen des ersten Rotationsstellventils und des zweiten Rotationsstellventils in Axialrichtung der Rotationsachse zueinander versetzt sind. Vorzugsweise erstreckt sich die jeweilige Durchgangskanalebene eines Rotationsstellventils quer, vorzugsweise senkrecht, zu der Axialrichtung der Rotationsachse.

Erfindungsgemäß ist der Ventilblock dadurch gekennzeichnet, dass wenigstens eines der Rotationsstellventile wenigstens zwei Leitungseingänge (A, B, F) und wenigstens ein Stellglied (13 ,23 ) mit wenigstens zwei Durchgangskanälen (15 c, i5 d, i5 e,25 ) aufweist, die jeweils einem der wenigstens zwei Leitungseingänge (A, B, F) zugeordnet sind.

Ein erfindungsgemäßer Ventilblock ermöglicht einen kompakten und relativ einfachen Aufbau, um innerhalb des Leitungssystems einer prozesstechnischen Anlage, wie einem Kernkraftwerk, eine Möglichkeit zum selektiven Führen beispielsweise von aktivierbaren und/oder aktivierten Radionuklid-Targets bereitzustellen, der gleichzeitig sicher vor Kontamination schützt, da sowohl in der Öffnungsstellung als auch in der Schließstellung des Stellglieds des Rotationsstellventils eine sichere Abdichtung des Leitungssystems relativ zu der Umgebung gewährleistet ist. Die Integration der mehreren Rotationsstellventile in einem einzelnen Ventilblock ermöglicht es, die Anzahl der Stell-Aktoren zur Verwendung mehrerer Rotationsstellventile zu reduzieren, was sowohl die Installation als auch den Betrieb der Anlage vereinfacht und den Raumbedarf gegenüber herkömmlichen Systemen erheblich reduziert. Die Leitungseingänge können in Umfangsrichtung relativ zu der Rotationsachse des Rotationsstellventils und/oder in Axialrichtung bezüglich der Rotationsachse des Rotationsstellventils zueinander versetzt angeordnet sein. Beispielsweise kann ein erster Leitungseingang eines Rotationsstellventils relativ zu dessen zweiten Leitungseingang bezüglich der Rotationsachse um 90° versetzt sein und/oder in Axialrichtung versetzt angeordnet sein. Bei einer solchen Ausführung können die zwei Durchgangskanäle, von denen einer dem ersten Leitungseingang und der andere dem zweiten Leitungseingang zugeordnet ist, berührungsfrei und/oder windschief zueinander durch das Stellglied verlaufen. Vorzugsweise schneiden bzw. tangieren die Durchgangskanäle eines Rotationsstellventils einander nicht. Die Durchgangskanäle können in Axialrichtung zueinander versetzt angeordnet sein und/oder eine Kanalkrümmung aufweisen, so dass sie einander nicht schneiden. Gemäß einer Weiterbildung können die Leitungseingänge der wenigstens zwei Rotationsstellventile des Ventilblocks und der jeweils dazugehörige Durchgangskanal so angeordnet sein, dass die wenigstens zwei in Axialrichtung zueinander versetzten Durchgangskanäle in derselben Stellung des Stellglieds ihren jeweiligen Leitungseingang mit einem jeweiligen Leitungsausgang verbinden. Diese Ausgestaltung ermöglicht eine weitere Kompaktierung eines Ventilblocks im Vergleich zu herkömmlichen Ventilanordnungen.

Gemäß einer Ausführung eines Ventilblocks verbindet in einer aktiven Öffnungsstellung ein aktiver Durchgangskanal einen Leitungseingang mit einem Leitungsausgang. Das Rotationsstellventil kann beispielsweise zwei, drei oder mehr Leitungsausgänge haben, wobei in einer ersten aktiven Öffnungsstellung ein dem ersten Leitungsausgang zugeordneter erster, aktiver Durchgangskanal den Leitungsausgang mit einem Leitungseingang verbindet. In einer zweiten aktiven Öffnungsstellung kann ein zweiter Leitungsausgang durch einen aktiven Durchgangskanal, welches der erste aktive Durchgangskanal oder ein zweiter Durchgangskanal sein kann, den zweiten Leitungsausgang mit dem zweiten Leitungseingang verbinden. In einer dritten aktiven Öffnungsstellung kann ein dritter Leitungsausgang durch einen aktiven Durchgangskanal, welches der erste Durchgangskanal, der zweite Durchgangskanal oder ein dritter Durchgangskanal des Rotationsstellventils sein kann, mit einem Leitungseingang verbunden sein. Vorzugsweise steht in der ersten aktiven Öffnungsstellung kein Durchgangskanal zur Verbindung eines eventuellen zweiten, dritten oder weiteren Leitungsausgangs mit einem Leitungseingang zur Verfügung. In jeder aktiven Öffnungsstellung kann genau einem Leitungseingang genau ein Leitungsausgang durch einen aktiven Durchgangskanal zugeordnet sein. Beispielsweise kann ein Rotationsventil mit einem Leitungseingang, drei nebeneinander angeordnete Durchgangskanäle und drei Leitungsausgängen vorgesehen sein, wobei abhängig von der Stellung des Stellglieds des Rotationsventils entweder der Leitungseingang über einen ersten Durchgangskanal mit dem ersten Leitungsausgang oder über den zweiten Durchgangskanal mit dem zweiten Leitungsausgang oder über den dritten Durchgangskanal mit dem dritten Leitungsausgang verbunden ist, wobei in der jeweiligen ersten, zweiten oder dritten Stellung der Leitungseingang mit keinem weiteren Leitungsausgang verbunden ist.

Gemäß einer Weiterbildung des Ventilblocks ist der aktive Durchgangskanal insbesondere derart bemessen, dass er mit dem Leitungseingang und/oder dem Leitungsausgang fluchtet. Vorzugsweise sind Durchgangskanal und Leitungseingang bzw. Durchgangskanal und Leitungsausgang bzw. Leitungsein- und -ausgang querschnittsgleich. Der Durchgangskanal kann mit dem Leitungseingang und/oder dem Leitungsausgang vorzugsweise totvolumenfrei fluchten. Gemäß einer besonderen Ausführung ist der Durchgangskanal zu dem Leitungsausgang und/oder zu dem Leitungseingang an der jeweiligen Schnittstelle zwischen Durchgangskanal und Leitungseingang bzw. Durchgangskanal und Leitungsausgang koaxial. Es ist denkbar, dass der Leitungsausgang koaxial zu dem vollständigen Durchgangskanal und dem Leitungseingang ist. Bei einem Ventilblock für ein molchbares und/oder festkörperführendes Leitungssystem hat ein möglichst genau fluchtender Übergang von Leitungseingang zum Durchgangskanal bzw. Durchgangskanal zu Leitungsausgang den Vorteil, dass dieser Übergang besonders gut dichtend und damit sicher ist, und Verschleiß sowie das Ansammeln von Schmutz im Übergangsbereich vermeidet. Speziell im Hinblick auf zu aktivierende Radionuklide, die häufig in Form von Festkörper-Kugeln gefördert werden, kann es von Vorteil sein, den Durchgangskanal, den Leitungseingang und/oder den Leitungsausgang mit einem vorzugsweise kreisförmigen Öffnungsquerschnitt gleicher Größe, geringfügig größer als der Außendurchmesser der (Radionuklid-)Kugeln, auszugestalten, um eine effiziente und verschleißarme Förderung der Kugeln durch einen koaxialen und totvolumenfreien Übergang von dem Durchgangskanal zu dem Leitungseingang und/oder dem Leitungsausgang zu gewährleisten. Eine derartige fluchtende Ausrichtung des Durchgangskanals mit dem Leitungseingang und/oder dem Leitungsausgang, welche vorzugsweise querschnittsgleich, koaxial und/oder totvolumenfrei ausgestaltet ist, soll vorzugsweise in mehreren Rotationsstellventilen des Ventilblocks, insbesondere bei sämtlichen Rotationsstellventilen des Ventilblocks realisiert sein.

Bei einer Ausgestaltung eines Rotationsstellventils mit einem Leitungseingang und zwei oder drei Leitungsausgängen kann vorgesehen sein, dass einer der Durchgangskanäle sich geradlinig durch das drehbare Stellglied erstreckt. Der zweite Durchgangskanal kann sich mit einer Krümmung erstrecken, um den ersten Leitungseingang in einer zweiten aktiven Öffnungsstellung mit einem, um beispielsweise 30° oder 60° relativ zu der Stellglied-Rotationsachse versetzt, relativ zu dem ersten Leitungseingang angeordneten zweiten Leitungseingang zu verbinden. Ein dritter Durchgangskanal kann dazu ausgestaltet sein, in einer dritten aktiven Öffnungsstellung den Leitungseingang mit einem dritten Leitungsausgang zu verbinden und zu diesem Zweck einen gekrümmten Durchgangskanal zu bilden, der zu einem dritten Leitungsausgang verläuft, welcher beispielsweise um 30° oder 60° gegenüber dem ersten Leitungsausgang versetzt in die andere Richtung angeordnet ist. Bei einem Rotationsstellventil mit nur zwei Leitungsausgängen kann es genügen, wenn ein erster und ein zweiter Durchgangskanal vorgesehen ist, wobei nur einer dieser beiden Durchgangskanäle gekrümmt sein kann und der andere geradlinig oder insbesondere spiegelverkehrt gekrümmt sein kann. Dabei ist bevorzugt, dass der Krümmungsradius eines Durchgangskanals wesentlich größer ist als der Durchmesser einer Radionuklid-Kugel, beispielsweise zweimal, fünfmal, zehnmal oder wenigstens zwanzigmal so groß.

Gemäß einer Ausführung eines Ventilblocks ist wenigstens eines der Rotationsstellventile des Ventilblocks ein Verteilerventil mit wenigstens einem Leitungseingang, wenigstens zwei Leitungsausgängen und wenigstens zwei, insbesondere in derselben Ebene angeordneten, separaten Durchgangskanälen. Die Durchgangskanäle des einen Rotationsstellventils des Ventilblocks sind insbesondere derart separat, dass sie einander nicht kreuzen, tangieren, berühren oder dergleichen. Die fluidischen Systeme der Durchgangskanäle sind in dem drehbaren Stellglied des Ventilblocks vorzugsweise vollständig getrennt voneinander. Bei dem Verteilerventil sind die wenigstens zwei Leitungsausgänge über jeweils einen Durchgangskanal demselben Leitungseingang zugeordnet oder unterschiedlichen Leitungseingängen zugeordnet. Das Verteilerventil kann eine erste aktive Öffnungsstellung aufweisen, in der der erste Durchgangskanal den Leitungsausgang mit einem ersten Leitungsausgang verbindet. Das Verteilerventil kann eine zweite aktive Öffnungsstellung aufweisen, in der ein zweiter Durchgangskanal den einen oder einen anderen Leitungseingang mit einem zweiten Leitungsausgang verbindet. Das Verteilerventil kann weitere dritte, vierte, etc. Öffnungsstellungen aufweisen, in der ein jeweiliger weiterer, dritter, vierter, etc. Durchgangskanal vorgesehen ist, der den Leitungseingang mit einem jeweiligen weiteren dritten, vierten, Leitungsausgang verbindet.

Die Erfindung betrifft auch ein Verteilerleitungssystem für eine prozesstechnische Anlage, wie ein Kernkraftwerk, insbesondere zum Ernten von Radionukliden, mit wenigstens einem Ventilblock nach einem der vorstehenden Ansprüche. Das Verteilerleitungssystem kann auch mehrere Ventilblöcke und speziell unterschiedlich ausgestaltete Ventilblöcke umfassen. Beispielsweise kann das Verteilerleitungssystem einen oder mehrere Verteilerventile wie oben beschrieben umfassen. Alternativ oder zusätzlich kann das Verteilerleitungssystem ein oder mehrere Ventilblöcke aufweisen, die eine reine Öffnungs-/Schließfunktion ohne Verteilerfunktion aufweisen (Notschließventil). Reine Schließ-Rotationsstellventile sind derart ausgestaltet, dass der wenigstens eine Durchgangskanal in dem Stellglied des Rotationsstellventils eine vorbestimmte Stellung einnehmen kann, in der ein Durchgang von einem Leitungseingang zu einem Leitungsausgang freigegeben ist und eine zweite Stellung, in der keiner der Leitungseingänge mit keinem Leitungsausgang verbunden ist. Insbesondere sind reine Schließ-Rotationsstellventile derart ausgestaltet, dass sie nicht einen Leitungseingang wahlweise mit einem Leitungsausgang oder einem anderen Leitungsausgang verbinden.

Es ist beispielsweise denkbar, dass ein erfindungsgemäßes Verteilerleitungssystem ein Verteilerventil wie oben beschrieben aufweist, das beispielsweise drei Leitungsausgänge je Rotationsstellventil hat. Der Ventilblock ist mit mehreren, beispielsweise zwei oder drei Rotationsstellventilen vorzugsweise gleicher Bauart ausgestattet. Beispielsweise umfasst der Ventilblock zwei oder drei insbesondere gleichartige Verteilerventile. Den jeweils drei Leitungsausgängen der Verteiler-Rotationsventile des Ventilblockes können mehrere erfindungsgemäße Schließ-Rotationsstellventile insbesondere in Form eines erfindungsgemäßen weiteren Ventilblockes nachgeordnet sein, beispielsweise drei Schließ-Ventilblöcke mit je genau zwei oder genau drei Schließ-Rotationsstellventilen. Bei einem derartigen Verteilerleitungssystem können ausgehend von drei einzelnen Leitungseingängen des vorgelagerten Verteiler-Ventilblocks neun Leitungsausgänge beispielsweise neun einzelne Empfänger, wie Instrumentationsfinger eines Reaktorkernes, bedient werden. Bei einem solchen Verteilerleitungssystem kann einem einzelnen Verteiler-Rotationsstellventil eines vorgelagerten Verteilerventilblocks je ein nachfolgender Schließventilblock zugeordnet sein, so dass die Instrumentationsfinger oder andere Empfänger einzeln bedienbar sind.

Alternativ ist es denkbar, dass dem vorgeschalteten Verteilerventilblock die nachfolgenden Schließ-Ventilblöcke derart nachgeordnet sind, dass bei der ersten aktiven Öffnungsstellung des vorgelagerten Verteilerventilblocks sämtliche erste Leitungsausgänge der mehreren in Axialrichtung versetzten Verteiler-Rotationsstellventile dem jeweiligen Leitungseingang des Verteiler-Rotationsstellventils des ersten Ventilblockes aktiv zugeordnet sind und dass ein dreisträngiger Schließ-Ventilblock den drei ersten Leitungsausgängen des Verteilerventilblockes zugeordnet ist, so dass gleichzeitig je drei von neun Instrumentationsfingern bedient werden. In gleicher Form ist den drei zweiten Leitungsausgängen des Verteilerventilblockes ein zweiter Schließ-Ventilblock zugeordnet, und den dritten Leitungsausgängen des Verteilerventilblocks ist ein dritter Schließ-Ventilblock zugeordnet.

Gemäß einer Weiterbildung eines Verteilerleitungssystems mit wenigstens einem Ventilblock wie oben beschrieben sind die mehreren, beispielsweise drei, Leitungsausgänge dieses Ventilblocks in fluidischer Kommunikation mit einem inneren Leitungssystemabschnitt, wie ein Hochdruckabschnitt, beispielsweise einem Reaktorkernabschnitt. Die mehreren, beispielsweise drei, Leitungseingänge des Ventilblockes stehen in fluidischer Kommunikation mit einem äußeren Leitungssystemabschnitt, wie einem Niederdruckabschnitt, beispielsweise einem Reaktoraußenbereichsabschnitt, welcher vorzugsweise innerhalb einer Kontaminationszone beispielsweise eines Reaktors vorgesehen sein kann. Dieser Ventilblock kann insbesondere als Notschließventilblock zum Abtrennen des inneren Leitungssystemabschnitts von dem äußeren Leitungssystemabschnitt realisiert sein. Es kann bevorzugt sein, dass bei einem Notschließventilblock Metalldichtungen vorgesehen sind. Der Hochdruckabschnitt kann beispielsweise für Rohrdrücke über 40 bar, insbesondere etwa 175 bar und/oder höchstens 500 bar oder höchstens 200 bar vorgesehen sein. Der Hochdruckabschnitt kann beispielsweise für hohe Temperaturen ab etwa 200°C bis etwa 500°C, insbesondere bis etwa 370°C, ausgestaltet sein. Ein Hochdruckabschnitt kann beispielsweise dazu ausgestaltet sein, eine Leckage zwischen Reaktorkern und Instrumentationsfinger zu ertragen. Der Niederdruckabschnitt kann beispielsweise für Rohrdrücke bis 20 bar oder bis 40 bar und/oder für Temperaturen bis etwa 100°C oder bis etwa 200°C ausgestaltet sein. Ein als Notschließventilblock ausgestalteter Ventilblock eines erfindungsgemäßen Verteilerleitungssystems kann speziell dafür vorgesehen sein, bei einer Leckage an einem Empfänger, beispielsweise einem Instrumentationsfinger in einem Reaktorkern, den Bereich außerhalb des Reaktorkerns sicher von dem Bereich im Inneren des Reaktorkerns abzutrennen, so dass eine Kontamination des Bereichs außerhalb des Reaktorkerns durch Siedewasser, Dampf oder dergleichen aus dem Reaktorkern, insbesondere kontaminiert mit hoch radioaktiven Partikeln, vermieden werden kann.

Konventionelle Vorrichtungen, wie die in US 2013/0170927 A1 beschriebene, verfügen nicht über Notschließventile oder gar einen Notschließventilblock an einem Übergang von einem Reaktor-Hochdruckabschnitt zu einem Reaktor-Niederdruckabschnitt, so dass eine Leckage an nur einem Instrumentationsfinger es erforderlich machen kann, das gesamte Reaktorsystem störfallbedingt vollständig herunterzufahren. Erst in dem vollständig heruntergefahrenen Zustand des Reaktors kann das mit einem leckgeschlagenen Instrumentationsfinger verbundene Leitungssystem im Bereich einer Reaktor-Grenze, insbesondere eines Reaktor-Deckels und/oder einer sogenannten Kabelbrücke, versiegelt werden, speziell durch manuelles Anbringen einer abdichtenden Verschlusskappe auf einem Rohrleitungsanschluss. Falls eine Gruppe von Instrumentationsfingern beispielsweise durch die Förderfluidverbindungen fluidisch miteinander in Kommunikation stehen, betrifft das Leck an einem einzigen Instrumentationsfinger gleich mehrere Finger, die alle versiegelt werden müssen, wozu einzelne Versiegelungen eigentlich intakter Instrumentationsfinger erforderlich sind. Falls bei einer Anlage, in der ein erfindungsgemäßes Verteilerleitungssystem eingesetzt ist, mehrere Empfänger, wie Instrumentationsfinger, miteinander in fluidischer Verbindung stehen, kann es vorteilhaft sein, Verteilerventilblöcke und/oder Schließ-Ventilblöcke derart auszulegen, dass die Leitungsausgänge der Verteilerventilblöcke und/oder der Schließ-Ventilblöcke so auf fluidisch miteinander kommunizierende Empfängergruppen abgestimmt sind, dass durch die Betätigung möglichst weniger, vorzugsweise nur eines, Verteilerventilblöcke oder möglichst weniger, oder nur eines oder nur zwei, Schließ-Ventilblöcke, sämtliche fluidisch miteinander verbundene Empfänger gleichzeitig abtrennen, wobei vorzugsweise alle übrigen Empfänger oder zumindest der überwiegende Teil der übrigen Empfänger von dem Abtrennen fehlerbehafteter Empfänger, wie einem Verbund fluidisch verbundener Instrumentationsfinger, von denen einer leckgeschlagen ist, unbeeinflusst bleiben.

Gemäß einer Weiterbildung des Verteilerleitungssystems umfasst der Ventilblock, insbesondere der Notschließventilblock, mehrere Rotationsstellventile, insbesondere metallisch dichtende Kugelhahnventile. Insbesondere umfasst der Ventilblock weniger als zehn, vorzugsweise weniger als sechs, besonders bevorzugt weniger als fünf, insbesondere genau zwei, genau drei oder genau vier Leitungsausgänge in fluidischer Kommunikation mit dem inneren Leitungssystemabschnitt. Die Anzahl der in fluidischer Kommunikation mit dem inneren Leitungssystemabschnitt stehenden Leitungsausgänge des Ventilblocks entspricht vorzugsweise einer Anzahl von fluidisch miteinander kommunizierenden Empfängern, wie Instrumentationsfingern. Eine geringe Anzahl von weniger als zehn Leitungsausgängen, insbesondere sechs oder vier Leitungsausgängen, kann insbesondere realisiert sein bei einem Rotationsstellventil bzw. Notschließ-Rotationsstellventil mit genau zwei darin integrierten Rotationsstellventilen oder genau drei darin integrierten Rotationsstellventilen mit je genau einem oder genau zwei Durchgangskanälen. Es hat sich herausgestellt, dass metallisch dichtende Rotationsstellventile aufgrund der sehr hohen Haft- und Gleitreibung einer metallischen Dichtung eine relativ hohe Stellkraft benötigen, so dass bei einer oben beschriebenen Anzahl von Leitungsausgängen mit zugeordneten Durchgangskanälen sichergestellt werden kann, dass ein Aktor zur Betätigung des (Notschließ-) Ventilblockes bereit gestellt werden kann, der einerseits ein sicheres Verfahren von einem aktiven Öffnungszustand und einem geschlossenen (Notschließ-) Zustand bei gleichzeitig verhältnismäßig geringem Bauraum und Gewicht gewährleistet.

Gemäß einer Weiterbildung eines Verteilerleitungssystems umfasst dieses wenigstens einen Verteilerventilblock. In einer prozesstechnischen Anlage, wie einem Kernkraftwerk, können mehrere solche Verteilerleitungs(sub)systeme parallel zueinander angeordnet sein und ein größeres, verästeltes Verteilerleitungssystem bilden, falls mehr als neun Empfänger bedient werden sollen. Beispielsweise kann die Parallelschaltung von drei solchen Verteilerleitungs(sub)systemen vorgesehen sein, um bis zu 27 Empfänger, wie Instrumentationsfinger, zu bedienen. Es sei klar, dass nicht sämtliche Leitungsausgänge mit einem Empfänger ausgestattet sein müssen, stattdessen kann auch beispielsweise ein Verschluss, wie eine Plombe, als sackgassenartiges Ende vorgesehen sein, beispielsweise falls bei der zu bedienenden prozesstechnischen Anlage eine geringere Anzahl von Empfängern vorhanden ist als das Verteilerleitungssystem bedienen könnte. Es ist auch denkbar, dass unterschiedlich dimensionierte Verteilerleitungssysteme nebeneinander geschaltet sind, beispielsweise zwei Verteilerleitungssysteme mit jeweils einem vorgeschalteten Verteilerventilblock mit drei Leitungseingängen und neun Leitungsausgängen (je drei erste, drei zweite und drei dritte Leitungsausgänge). Daneben kann ein weiteres, anders dimensioniertes Verteilerleitungssystem vorgesehen sein, beispielsweise mit einem Verteilerventilblock, der zwei oder drei Leitungseingänge und bloß sechs Leitungsausgänge aufweist (entweder gemäß einer ersten Alternative drei erste Leitungsausgänge und drei zweite Leitungsausgänge oder gemäß einer zweiten Alternative zwei erste Leitungsausgänge, zwei zweite Leitungsausgänge und zwei dritte Leitungsausgänge). Diesen sechs Leitungsausgängen können zwei SchließVentilblöcke zugeordnet sein, um sechs Empfänger, wie Instrumentationsfinger, zu bedienen. Ein derartiges Verteilerleitungssystem wäre für 24 Empfänger ausgestaltet. Bei einem solchen Verteilerleitungssystem - wie oben beschrieben - mit 27 oder 24 Leitungsausgängen kann den drei Verteilerventilblöcken, die den Schließ-Ventilblöcken vorgelagert sind, ein weiterer Verteilerventilblock vorgeleitet sein, der ebenfalls erfindungsgemäß ausgestaltet sein kann, um die insgesamt beispielsweise neun oder acht Leitungseingänge der oben beschriebenen Verteilerventilblöcke ausgehend von beispielsweise drei System-Leitungseingängen zu bedienen. Bei einem Verteilerleitungssystem ist es darüber hinaus denkbar, einem Verteilerventilblock bzw. den Leitungseingängen mehrerer Verteilungsventilblöcke vorgelagert eine weitere Verteilervorrichtung anzuordnen, die nicht erfindungsgemäß ausgestaltet zu sein braucht.

Gemäß einer Weiterbildung eines Verteilerleitungssystems mit wenigstens einem Verteilerventilblock kann wenigstens ein zweiter Verteilerventilblock vorgesehen sein. Der zweite Verteilerventilblock kann wie oben beschrieben parallel neben dem ersten Verteilerventilblock angeordnet sein. Alternativ oder zusätzlich kann ein zusätzlicher zweiter oder dritter Verteilerventilblock insbesondere kaskadenartig mit dem ersten bzw. ggf. zweiten Verteilerventilblock in Reihe geschaltet sein.

Gemäß einer Weiterbildung eines Verteilerleitungssystems mit wenigstens einem Verteilerventil, einem Verteilerventilblock wie oben beschrieben, oder einem Verteilerventil, welches nicht notwendigerweise Teil eines Verteilerventilblocks sein braucht, steht von dem wenigstens einen Verteilerventilblock oder Verteilerventil wenigstens ein Leitungsausgang in fluidischer Kommunikation mit einem Kugelmesstisch und wenigstens ein anderer Leitungsausgang steht in fluidischer Kommunikation mit einer Radionuklid-Teststation oder einer Radionuklid-Lagervorrichtung. Dieses zusätzliche Verteilerventil oder Verteilerventilblock hat wenigstens einen Leitungseingang, der in Richtung des Empfängers, insbesondere des oder der Instrumentationsfinger(s) ausgerichtet ist, und dient der gezielten Verteilung von (Radionuklid-) Kugeln ausgehend von dem Empfänger, wie dem in dem Reaktorkern angeordneten Instrumentationsfinger oder - fingern, zu dem oben genannten Kugelmesstisch, dem Leitungsausgang und/oder der Radionuklid-Erntestation der prozesstechnischen Anlage.

Bevorzugte Ausgestaltungen der Erfindung sind in den Unteransprüchen angegeben. Obwohl die zuvor genannten exemplarischen Anwendungsbeispiele eines erfindungsgemäßen Ventilblocks bzw. eines erfindungsgemäßen Verteilerleitungssystems speziell im Hinblick auf die Nutzung in einem Kernkraftwerk beschrieben sind, sei klar, dass auch andere festkörperführende Leitungssysteme relevant sind. Ein erfindungsgemäßer Ventilblock und/oder ein erfindungsgemäßes Verteilerleitungssystem kann beispielsweise auch in einer prozesstechnischen Anlage, wie einer chemischen Anlage, beispielsweise einer Raffinerie, insbesondere einer Erdöl-Raffinerie, einer Erdöl-Pipeline, einer Lebensmittel verarbeitenden Anlage, einer Schüttgut verarbeitenden Anlage, einer Anlage zur Medikamentenproduktion oder dergleichen eingesetzt werden.

Die von dem Leitungssystem bzw. dem Verteilerleitungssystem bzw. dem Ventilblock zu führenden Festkörper können beispielsweise Kugeln sein, insbesondere Kugeln mit einem Außendurchmesser von 1 mm bis 3 mm, beispielsweise etwa 1,7 mm. Das Leitungssystem bzw. der Durchgangskanal kann eine an das Fördergut angepasste lichte Weite aufweisen. Die lichte Weite ist wenigstens genauso groß wie, vorzugsweise etwas größer als, das Fördergut bemessen. Beispielsweise ist die lichte Weite wenigstens 5 %, wenigstens 10 % oder wenigstens 15 % größer und/oder nicht mehr als 50 % größer, nicht mehr als 40 % größer oder nicht mehr als 30 % größer als der Außendurchmesser einer Fördergut-Einheit. Beispielsweise kann der Innendurchmesser des Leitungssystems und/oder eines Durchgangskanals insbesondere zur Förderung von Radionuklid-Kugeln mit einem Durchmesser von 1,7 mm, einem Innendurchmesser von etwa 2 mm aufweisen. Das Leitungssystem kann insbesondere zur rohrpostartigen Förderung des zu führenden Festkörper-Mediums, wie Kugeln, mit einem Treibstoff, wie Stickstoff, Umgebungsluft oder dergleichen vorgesehen sein, wobei das Leitungssystem in einer solchen Ausgestaltung doppelwandig ausgeführt sein kann mit einer inneren lichten Weite, die auf das Fördergut abgestimmt ist, und einer äußeren lichten Weite zur Führung des Fördermediums, die größer ist als die innere lichte Weite. Beispielsweise kann das doppelwandige Rohr einen inneren Innendurchmesser von 2 mm und einen äußeren Innendurchmesser von 4 mm aufweisen.

Bei einer prozesstechnischen Anlage in Form einer Radionuklid-Aktivierungsanlage können als zu führendes Festkörpermedium beispielsweise Kugeln vorgesehen sein, die wenigstens eines der folgenden (noch nicht aktivierten) Nuklide enthalten oder daraus bestehen: Mo-98, Yb-176, V-51.

Als Festkörpermaterialien zur Förderung in einer derartigen Anlage kommen außerdem die in WO 2016/120120 A1 beschriebenen Materialien in Betracht. Ferner kommen als Festkörpermaterialien zur Führung in einer derartigen Anlage die in WO 2016/119862 A1 beschriebenen Materialien in Betracht. Außerdem kommen die in WO 2016/119864 A1 beschriebenen Materialien als Festkörper für eine derartige Anlage in Betracht.

Weitere Eigenschaften, Vorteile und Merkmale der Erfindung werden durch die folgende Beschreibung bevorzugter Ausführungen der Erfindung anhand der beiliegenden Zeichnungen deutlicher, in denen zeigen:
- Fig. 1: eine schematische Ansicht eines erfindungsgemäßen Verteilerleitungssystems für eine prozesstechnische Anlage, das mehrere erfindungsgemäße Ventilblöcke umfasst;
- Fig. 2a-2f: schematische Darstellungen unterschiedlicher Stellungen eines Rotationsstellventils mit zwei oder drei Durchgangskanälen;
- Fig. 3a: eine Querschnittsansicht eines erfindungsgemäßen Verteilerventilblocks;
- Fig. 3b: eine Schnittansicht durch ein Rotationsstellventil des Verteilerventilblocks gemäß Fig. 3a gemäß der Schnittlinie II; und
- Fig. 4: eine Schnittansicht eines erfindungsgemäßen Schließblockventils.

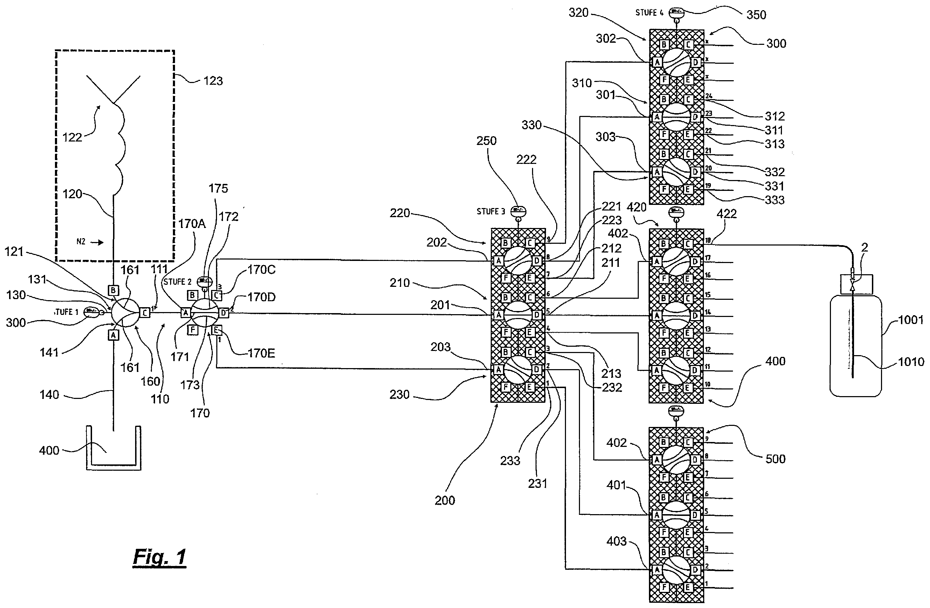

Fig. 1 zeigt eine schematische Darstellung eines Ausführungsbeispiels eines erfindungsgemäßen Verteilersystems 100 für eine prozesstechnische Anlage, beispielsweise zum wahlweisen Transferieren von Nuklidaktivierungs-Targets und Messkörpern in bzw. aus einem Instrumentationsfinger eines kommerziellen Kernreaktors (nicht näher dargestellt). Das System erlaubt es bei der beispielhaften Anwendung einerseits, den betrieblichen Vorschriften zur Durchführung sogenannter Kugelschussmessungen, die der Bestimmung der Leistungsdichteverteilung bzw. des Neutronenflusses im Reaktorkern dienen, zu genügen und andererseits in den dazwischenliegenden messfreien Zeiträumen, die von den Kernbrennstäben emittierte Strahlung zur Bestrahlung von Nuklidaktivierungs-Targets zu nutzen.

Das Leitungssystem 100 zum Aufnehmen und Transportieren der Messkörper und Targets umfasst mehrere in einer Mehrwege-Armatur 160 mündende Leitungszweige 110, 120, 130, 140, die über die schaltbare Mehrwege-Armatur 160 wahlweise miteinander in Strömungsverbindung gebracht werden können. Im vorliegenden Ausführungsbeispiel umfasst das Leitungssystem 100 einen Reaktorzweig 110, der über endseitige Kupplungen in Form der unten im Detail beschriebenen Schließventilblöcke 2 an (nicht näher dargestellte) Empfänger, wie Instrumentationsfinger in einem Reaktorkern angekoppelt ist. Das Leitungssystem 100 umfasst ferner einen Speicherzweig 120 zum Zwischenspeichern der Messkörper oder Targets, sowie einen Messzweig 130, der an eine Messeinrichtung 300, insbesondere einen sogenannten, etwa aus US 3 711 714 bekannten Messtisch, zum Bestimmen der Aktivität der Messkörper angekoppelt ist. Ferner kann das Leitungssystem 100 einen (nicht näher dargestellten) Einführzweig umfassen, der an eine Einführeinrichtung, etwa einen Transportbehälter, ankoppelbar ist, um neue, unbestrahlte Targets in das Leitungssystem 100 einzuführen.

Zum Entnehmen von bestrahlten Targets weist das Leitungssystem 100 ferner einen Entnahmezweig 140 auf, über den die bestrahlten Targets in einen Entnahmebehälter 400 transferiert werden können. Sämtliche Zweige 110, 120, 130, 140 des Leitungssystems münden knotenpunktartig in das Verteilerventil bzw. die Mehrwege-Armatur 160. Zum pneumatischen Transportieren der Messkörper und Targets weist das Verteilersystem 100 eine pneumatische Transporteinrichtung auf (nicht näher dargestellt). Als Transportgas kommt vorzugsweise Stickstoff zum Einsatz.

Zum Aktivieren, d.h. zum Umwandeln der Targets in Radionuklide, werden diese im Instrumentationsfinger gehalten, typischerweise für mehrere Tage bis Wochen. Wird während dieser Zeit eine Kugelschussmessung aufgrund betrieblicher Sicherheitsvorschriften notwendig, können die Targets vorübergehend im Speicherzweig 120 zwischengeparkt werden. Hierzu wird Transportgas in eine Finger-Gasleitung eingelassen, wodurch die teilaktivierten Targets aus dem Instrumentationsfinger über den Reaktorzweig 110 und das Mehrwegeventil 160 in den Speicherzweig 120 transferiert werden. Aus Strahlenschutzgründen ist jener Abschnitt 122 des Speicherzweigs 120, in dem die teilbestrahlten Targets zwischengeparkt sind, vorzugsweise mit einer Abschirmung 123 gegen ionisierende Strahlung versehen.

Für die anstehende Kugelschussmessung wird die Mehrwege-Armatur 160 sodann in die zweite Schaltstellung gebracht. Anschließend wird Transportgas in die Messeinrichtung 300 eingelassen, um die Messkörper über den Messzweig 130, die Mehrwege-Armatur 160 und den Reaktorzweig 110 in die Instrumentationsfinger zu transferieren. Nach erfolgter Bestrahlung der Messkörper werden diese mittels Transportgas aus dem Instrumentationsfinger über den Reaktorzweig 110, das Mehrwegeventil 160 und den Messzweig 130 zurück in die Messeinrichtung 300 transferiert. Dort kann die Aktivität der bestrahlten Messkörper zur Bestimmung des Leistungsdichteprofiles des Reaktors gemessen werden.

Sobald sich die Messkörper in der Messeinrichtung 300 befinden, kann die Aktivierung der teilbestrahlten Targets fortgesetzt werden. Hierzu werden die Targets - entsprechend dem bereits weiter oben beschriebenen Ablauf - aus dem Speicherzweig 120 zurück in den Instrumentationsfinger 1010 transferiert.

Nach der vollständigen Aktivierung der Targets werden diese zwecks Entnahme aus dem Leitungssystem zunächst in einen Abschnitt des Reaktorzweigs 110 transferiert, dessen Länge wenigstens der Länge der Kette der im Leitungssystem aneinander gereihten Targets entspricht. Dann wird die Mehrwege-Armatur 160 dazu eingestellt, den Reaktorzweig 110 mit dem Entnahmezweig 140 zu verbinden. Die Targets können drucklos und ausschließlich gravitationsgetrieben aus dem Reaktorzweig 110 über die Mehrwege-Armatur 160 und einen vorzugsweise in vertikaler Richtung darunter angeordneten, insbesondere monoton fallenden Entnahmezweig 140 in den Entnahmebehälter 400 überführt werden.

Der von der Mehrwege-Armatur 160 ausgehende Reaktorzweig 110 verästelt sich hin zu den nicht näher dargestellten Instrumentationsfingern, die bei diesem Beispiel die Empfänger des Verteilungsleitungssystems 100 realisieren, und zwar derart, dass beispielsweise 24 individuelle Instrumentationsfinger ausgehend von der Mehrwege-Armatur 160 bedient werden können. Die Verästelung des Reaktorzweiges 110 ist durch eine kaskadenartige Reihenschaltung von hintereinander angeordneten Verteilerkomponenten realisiert.

Auf die Mehrwege-Armatur 160 folgt zunächst ein Verteilerventil 170, das bei der dargestellten bevorzugten Ausführung nur ein einziges Rotationsventil umfasst. Dieses Rotationsventil ist im Wesentlichen wie die Mehrwege-Armatur 160 ausgebildet. So kann bei dem Verteilerventil 170 ein Leitungseingang 170A vorgesehen sein, um aus der Mehrwege-Armatur 160 weiter in den Reaktorzweig 110 zu führen. Das Verteilerventil 170 weist drei Durchgangskanäle 171, 172, 173 auf, die in demselben Stellglied des einzigen Rotationsstellventils vorzugsweise in derselben horizontalen Ebene angebracht sind. Jedem dieser drei Durchgangskanäle 171, 172, 173 ist ein Leitungsausgang 170C, 170D, 170E des Verteilerventils 170 spezifisch zugeordnet.

Das Verteilerventil 170 umfasst einen Leitungseingang 170A, der abhängig von der Stellung des Stellgliedes des Verteilerglieds 170 mit genau einem der drei Leitungsausgänge 170C, 170D oder 170E fluidisch verbunden werden kann, um in dem Verteilerleitungssystem 100 zu fördernde Feststoffe, beispielsweise Radionuklid-Kugeln, zu führen. Das Ventilglied des Verteilerventils 170 kann mehrere, im abgebildeten Beispiel genau drei, Förderstellungen einnehmen. In der ersten Förderstellung verbindet der erste Durchgangskanal 171 den Leitungseingang 170A mit dem ersten Leitungsausgang 170D. In der zweiten Stellung verbindet der zweite Durchgangskanal 172 den Leitungseingang 170A mit dem zweiten Leitungsausgang 170C. In der dritten Stellung verbindet der dritte Durchgangskanal 173 den Leitungseingang 170A mit dem dritten Leitungsausgang 170E. Das Verteilerventil 170 des Reaktorzweiges 110 kann als 1/3-Wegeventil bezeichnet sein. Das Verteilerventil 170 ist mit einem Aktor 175, beispielsweise einem pneumatischen oder elektrischen Stellantrieb, ausgestattet, der das Ventil 170 zum Einnehmen einer der oben beschriebenen Stellungen betätigt. An die Leitungsausgänge 170C, 170D und 170E des Verteilerventils 170 ist ein erster Verteilerventilblock 200 angeschlossen.

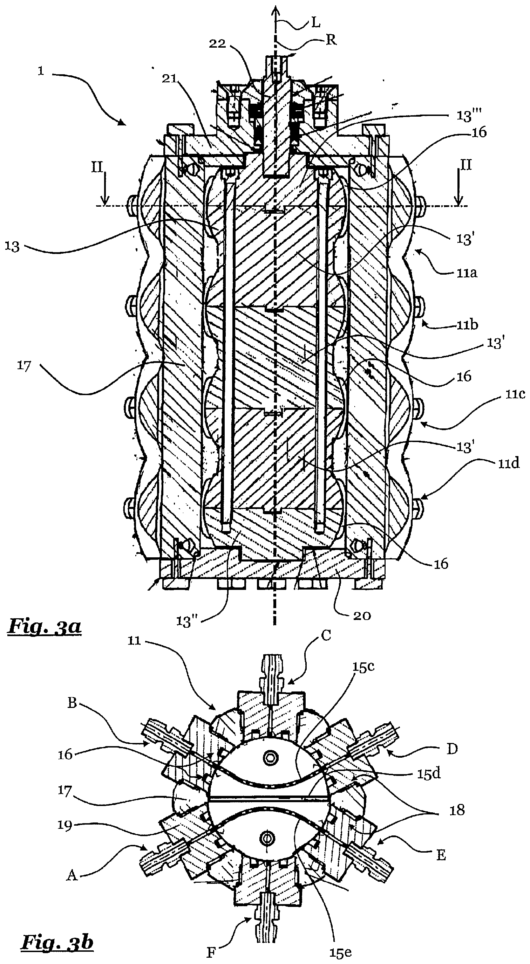

Der erste Ventilblock 200 umfasst drei miteinander gekoppelte Rotationsstellventile 210, 220, 230. Auf den Aufbau eines beispielhaften Verteilerventilblocks wird unten im Hinblick auf Fig. 3a und 3b im Detail eingegangen. Die drei Verteilerventile 210, 220, 230, die zu dem Verteilerventilblock 200 zusammengesetzt sind, sind im Wesentlichen wie das vorhergehende Verteilerventil 170 aufgebaut.

Der erste Leitungsausgang 170D des Verteilerventils 170 führt zu dem Leitungseingang 220A des ersten Verteilerventils 210 des Verteilerventilblocks 200. Der zweite Leitungsausgang 170C des Verteilerventils 170 führt zu dem zweiten Verteilerventil 220 des Verteilerventilblocks 200. Der dritte Leitungsausgang 170E des Verteilerventils 170 führt zu dem dritten Verteilerventil 230 des Verteilerventilblocks 200. Jedes der Verteilerventile 210, 220 und 230 des Verteilerventilblocks 200 ist gleichartig aufgebaut. Die Stellglieder der Ventile 210, 220 und 230 sind drehfest miteinander verbunden durch eine gemeinsame Stellstange und werden mit einem gemeinsamen Stellaktor 250 betätigt. Der Stellaktor 250 des ersten Verteilerventilblocks 200 kann beispielsweise ein pneumatischer oder elektrischer Antrieb sein. Es ist denkbar, dass der Aktor 250 (oder 175) einen eingeschränkten Drehbereich, beispielsweise bis zu ± 60°, bis zu ± 90° oder bis zu ± 120° aufweist. Vorzugsweise ist der Stellantrieb 250 des Verteilerventilblocks 200 leistungsstärker ausgelegt als der Aktor 175 des Verteilerventils 170, um den deutlich erhöhten Gleitwiderständen der mehreren gemeinsam betätigten Rotationsstellglieder des Ventilblockes 200 im Vergleich zu dem einzelnen Rotationsstellglieder des einfachen 1/3-Wegeventils 170 Rechnung zu tragen.

Wie das zuvor beschriebene Verteilerventil 170 weisen die Verteilerventile 210, 220 und 230 des Verteilerventilblocks 200 einen jeweiligen Leitungseingang 201, 202, 203 und drei jeweilige Leitungsausgänge auf, sowie eine entsprechende Anzahl von Durchgangskanälen in dem jeweiligen Stellglied eines Verteilerventils. Abhängig von der Stellung des Stellgliedes verbindet ein Durchgangskanal des Stellglieds einen der jeweiligen Leitungsausgänge mit dem jeweiligen Leitungseingang. Der Ventilblock 200 hat neun Leitungsausgänge.

Infolge der drehstarren Verbindung der Stellglieder miteinander kann es bevorzugt sein, dass die einzelnen Stellventile 210, 220 und 230 des Ventilblocks 1 derart aufeinander abgestimmt sind, dass sie zueinander korrespondierende Stellungen einnehmen. Nur zur Veranschaulichung sind für die einzelnen Stellventile des Stellventilblocks 200 in Fig. 1 unterschiedliche Stellungen der Ventilglieder abgebildet. Die einzelnen Stellventile eines Stellventilblocks 200 sind vorzugsweise derart aufeinander abgestimmt, dass in einer ersten Blockschaltstellung bei sämtlichen Stellventilen 210, 220, 230 der Leitungseingang 201, 202 oder 203 mit einem ersten Leitungsausgang 211, 221 oder 231 verbunden ist, in einer zweiten Blockschaltstellung der Leitungseingang 201, 202 oder 203 mit einem zweiten Leitungsausgang 212, 222 oder 232 verbunden ist und in einer dritten Blockschaltstellung der Leitungseingang 201, 202 oder 203 mit einem dritten Leitungsausgang 213, 223 oder 233 verbunden ist.

An die Leitungsausgänge des ersten Verteilerventilblocks 200 sind drei weitere Verteilerventilblöcke 300, 400, 500 gleicher Bauart angeschlossen. Die Verteilerventilblöcke 300, 400, 500 sind vorzugsweise genau wie der vorherige Verteilerventilblock 200 strukturiert und funktionieren auf gleiche Weise. Folglich wird auf eine erneute redundante Beschreibung der einzelnen Komponenten und Funktionen der zweiten Ventilblöcke 300, 400, 500 verzichtet. Die gleichen Komponenten haben um 100 erhöhte Bezugszeichen.

Wie in Fig. 1 dargestellt, kann ein Verteilerleitungssystem 100 derart ausgestaltet sein, dass die Leitungseingänge eines der zweiten Verteilerventilblöcke 300, 400, 500 an die Leitungsausgänge eines einzelnen Verteilerventils 210, 220 oder 230 des ersten Verteilerventilblocks 200 angeschlossen sind. Eine andere Anordnung bzw. Verbindung des Ventilblocks und der zweiten Ventilblöcke kann bevorzugt sein. Beispielsweise kann mit den drei ersten Ausgängen 211, 221, 231 unterschiedlicher Verteilerventile des ersten Ventilblockes 200 ein erster nachfolgender (zweiter) Ventilblock (z.B. 300) verbunden sein (nicht abgebildet). An die zweiten Ausgänge 212, 222, 232 des ersten Ventilblockes 200 kann ein zweiter nachfolgender (zweiter) Ventilblock (z.B. 400) angeschlossen sein und an die dritten Leitungsausgänge 213, 223, 233 des ersten Ventilblocks 200 ein dritter nachfolgender (zweiter) Ventilblock (z.B. 500).

Die zweiten Verteilerventilblöcke 300, 400 und 500 können im Vergleich zu dem ersten Verteilerventilblock 200 auch anders als baugleich ausgestaltet sein. Zur vereinfachten Darstellung der Erfindung ist in Fig. 1 eine Abbildung gewählt, in der sämtliche Verteilerventilblöcke 200, 300, 400 und 500 gleichartig sind. Die in zweiter Kaskadenreihe angeordneten Verteilerventilblöcke 300, 400 und 500 haben je drei Leitungseingänge 301, 302, 303; 401, 402, 403; sowie 501, 502 und 503. Jedem der Leitungseingänge sind je drei Leitungsausgänge über ein jeweiliges Rotationsstellventil zugeordnet. In Summe stellen die in zweiter Kaskadenreihe angeordneten Verteilerventilblöcke 27 Leitungsausgänge bereit, von denen ausgehend einzelne Empfänger, beispielsweise Instrumentationsfinger 1010 in einem Reaktorkern 1001 bedient werden können (schematisch ist ein Instrumentationsfinger abgebildet).

Bei dem abgebildeten Beispiel sind 24 individuelle Empfänger vorgesehen. Daher sind mehrere, hier drei Leitungsausgänge verplombt, nämlich die Leitungsausgänge des zweiten Rotationsstellventils 320 des ersten Verteilerventilblocks 300 in der zweiten Kaskadenreihe. Alternativ wäre es denkbar, eine Verplombung unmittelbar an dem zweiten Ausgang 222 des zweiten Stellventils des ersten Ventilblockes 200 vorzusehen und einen kleiner dimensionierten Stellventilblock mit beispielsweise nur zwei Stellventil-Ebenen anstelle des abgebildeten Stellventilblocks 300 vorzusehen.

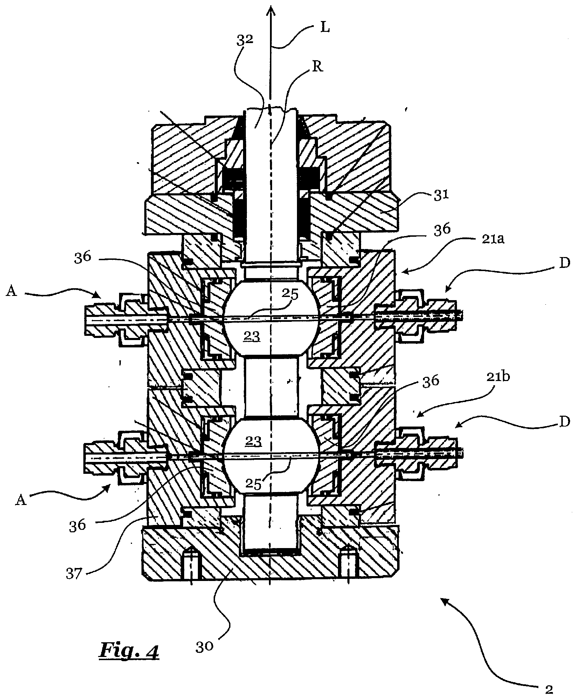

Zwischen den Ausgängen der Verteilerventilblöcke der zweiten Kaskadenstufe 300, 400 und 500 und dem jeweiligen Empfänger, beispielsweise einem Reaktorkern-Instrumentationsfinger, kann zum Bereitstellen einer Systemgrenze ein Notschließventil, beispielsweise in Form eines erfindungsgemäßen Notschließventilblocks 2 wie unten bezüglich Fig. 4 im Detail beschrieben vorgesehen sein (hier nur schematisch für einen Instrumentationsfinger 1010 abgebildet).

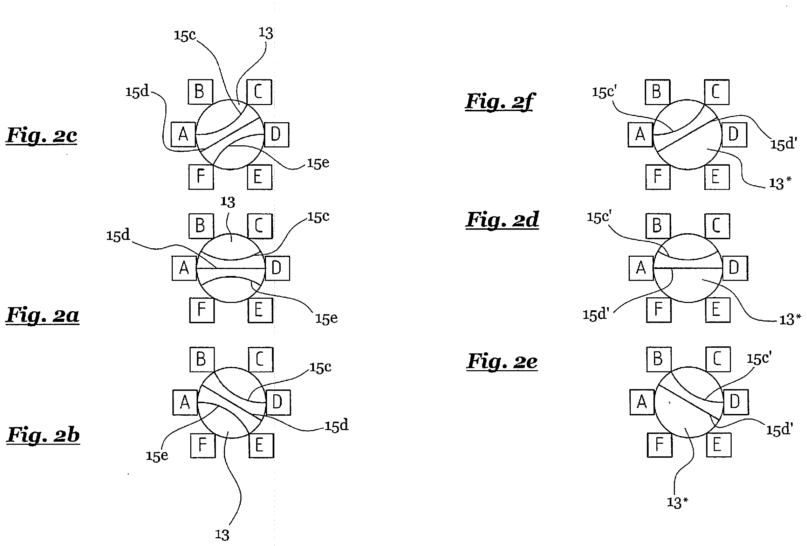

Die Figuren. 2a, 2b und 2c zeigen Schaltstellungen für ein Stellventil entsprechend den Stellungen, die bei den Ventilblöcken 200, 300, 400 und 500 in Fig. 1 dargestellt sind. Im Unterschied zu der Abbildung gemäß Fig. 1 ist es denkbar, dass zusätzlich zu dem einen Leitungseingang A weitere Leitungseingänge B, F vorgesehen sind. Bei dem in Fig. 2a bis Fig. 2c dargestellten Beispiel sind drei Leitungsausgänge C, D und E vorgesehen. Fig. 2a zeigt eine erste Aktivstellung, in der der erste Ventileingang A mit dem ersten Ventilausgang D durch einen ersten Durchgangskanal 15d, welcher sich durch das Stellglied 13 des Stellventils 200 erstreckt, verbunden ist. Die beiden anderen Durchgangskanäle 15c und 15e in dem Ventilglied 13 sind in dieser ersten aktiven Stellung weder mit einem Leitungseingang noch mit einem Leitungsausgang verbunden.

Fig. 2b zeigt eine zweite Schaltstellung, bei der der erste Leitungseingang A mit einem zweiten Leitungsausgang E über einen gekrümmten Durchgangskanal 15e verbunden ist. Der Krümmung entspricht in etwa dem Radius des Stellgliedes ±50%. Der erste Durchgangskanal 15d steht weder mit einem Leitungseingang noch mit einem Leitungsausgang in Kontakt. Der dritte Durchgangskanal 15c, welcher spiegelbildlich mit umgekehrter Krümmung relativ zu dem zweiten Durchgangskanal 150 durch das Stellglied 13 verläuft, verbindet einen zweiten Leitungseingang B mit dem ersten Leitungsausgang D. Das Stellglied 13 verschließt den dritten Leitungseingang F und den dritten Leitungsausgang C.

Bei der in Fig. 2c dargestellten dritten Schaltstellung des Ventils verbindet der dritte Durchgangskanal 15c den ersten Leitungseingang A mit dem dritten Leitungsausgang C. Der dritte Leitungseingang F ist mit dem Durchgangskanal 15e mit dem ersten Leitungsausgang D verbunden. Der zweite Leitungseingang B und der zweite Leitungsausgang E sind verschlossen. Mit dem ersten Durchgangskanal 15d stehen keine Leitungsein- und/oder -ausgänge in Kontakt.

Fig. 2d, 2e und 2f zeigen eine alternative Ausführung eines Rotationsstellventils mit drei Leitungseingängen A, B und F und drei Leitungsausgängen D, C und E und einem Stellglied 13^{∗}, in dem genau zwei Durchgangskanäle 15d' und 15c' vorgesehen sind. Die Durchgangskanäle 15d' und 15c' entsprechen den zuvor beschriebenen Leitungsdurchgangskanälen 15d und 15c von Fig. 2a bis 2c. Im Hinblick auf die in Fig. 3d bis 3f abgebildeten Schaltstellungen wird insoweit auf die zuvor beschriebene Schaltstellung verwiesen.

Bei den in Fig. 2d, 2e und 2f abgebildeten Stellungen ist der dritte Leitungseingang F stets verschlossen, ebenso wie der zweite Leitungsausgang E. Es ist denkbar, dass bei einem solchen Stellventil nur der erste und der zweite Leitungseingang A und B und der erste und der dritte Leitungsausgang D und C vorgesehen sind, also nur zwei Leitungsein- und zwei Leitungsausgänge. Alternativ ist es denkbar, dass das Stellventil weitere (nicht abgebildete) Stellungen ähnlich den in Fig. 2d und 2f abgebildeten Stellungen, jedoch mit spiegelbildlicher Schaltstellung des Ventilglieds 13^{∗}, einnehmen kann, um den dritten Leitungseingang F oder den zweiten Leitungsausgang E mit wenigstens einem der übrigen Leitungsein- bzw. Leitungsausgänge zu verbinden.

Fig. 3a und Fig. 3b zeigen den Ventilblock 200, der vier in Axialrichtung zueinander versetzte Rotationsstellventile in Form von Kugelhahnventilen 11 umfasst. Der Ventilblock 1 umfasst vier rotationsstarr miteinander verbundene Kugelhahnventile 11a, 11b, 11c, 11d.

Es ist denkbar, dass die Kugelhahnventile 11 durch 3D-Druck oder dergleichen gefertigt sind. Die abgebildeten Kugelhahnventile 11 sind nach dem Prinzip der geteilten Kugel gefertigt, d.h. jedes Kugelhahnventil ist in einer senkrecht auf der Rotationsachse R stehende Ebene (beispielsweise der Schnittebene II) geteilt, und an der Schnittebene sind in die Oberflächen einer Kugelhälfte oder die Oberflächen beider Kugelhälften, beispielsweise durch Fräsen, die Durchgangskanäle 15d, 15c und 15e eingebracht.

Wie in Fig. 3a ersichtlich, sind die Kugelhahnventilglieder 13 entlang der Rotationsachse R aufeinander gestapelt. Der Ventilblock 200 hat ein zusammengesetztes Stellglied für die vier Kugelhahnventile 11a bis 11d, welches sich aus fünf Teilen zusammensetzt, nämlich oben und unten je einer Halbkugel 13‴, 13ʺ und drei insbesondere gleichartigen Doppelkugelhälften 13′, die jeweils an ihrer Oberseite und ihrer Unterseite eine flache Seite aufweisen, in der der Durchgangskanal ausgebildet sein kann.

Die Deckel-Halbkugel 13‴, die drei Doppel-Kugelhälften 13′ und die Boden-Halbkugel 13ʺ sind drehfest miteinander verbunden durch Verbindungsschrauben, die sich quer durch alle Kugelhälfte erstrecken und/oder mittels Formschlusspaarungen.

In der horizontalen Ebene, in welcher sich die Durchgangskanäle 15c, 15d, 15e erstrecken, haben die Kugelhälften ihren größten Außendurchmesser. In Richtung der Längsachse L oberhalb und unterhalb dieser jeweiligen Ebene verschmälert sich der Außenumfang der Kugelhälften relativ zu der Drehachse R. In dem Umfangsbereich, welcher den Eingang bzw. Ausgang der Durchgangskanäle 15c, 15d oder 15e umgibt, sind die Ventilglieder 13 mit jeweils wenigstens einem Dichtelement 16 ausgestattet. Das Dichtelement 16 erstreckt sich rund um ein jeweiliges Kugelhahn-Ventilglied und/oder ringförmig um einen Eingang oder Ausgang des Durchgangskanals 15c, 15d, 15e. Vorzugsweise sind die Dichtungen 16 drehfest mit dem Gehäuse 17 verbunden, welches die Stellglieder 13 umgibt. Die Dichtungen 16 dienen dazu, ein Förderfluid verlustfrei zwischen Leitungseingängen A, B, F und Leitungsausgängen C, D, E zu transferieren. Sie haben ferner den Zweck, in einer Schließstellung des Stellglieds 13, einen abdichtenden Verschluss zu gewährleisten.

Das Gehäuse 17, welches die Kugelhahnventilglieder 13 umgibt, hat eine im Wesentlichen hohlzylindrische Form. Für die Leitungseingänge A, B, F und die Leitungsausgänge C, D und E sind Durchgänge durch die Wandung des Gehäuses 17 eingebracht. Beispielsweise kann das Gehäuse 17 Gewindebohrungen 18 aufweisen, in die je ein Leitungsverbinder 19 eingeschraubt ist. Am radial inneren Ende eines Leitungsverbinders 19 kann eine Aufnahme für das ringförmige Dichtelement 16 ausgebildet sein. An einem Leitungsanschluss 19 kann ein Montageadapter zum einfacheren Anbringen von Leitungen eines bestehenden Verteilerleitungssystem eines Atomkraftwerks oder dergleichen vorgesehen sein. An den Enden des Gehäuses 17 in Axialrichtung L kann je auf einer Seite ein Verschlussflansch 20 und auf der anderen Seite ein Antriebs-Adapter-Flansch 21 befestigt sein. Der Verschlussflansch 20 kann beispielsweise mittels Schrauben an dem Hülsenkörper des Gehäuses 17 befestigt sein und eine Gleitlageraufnahme zum Fixieren des Kugelhahn-Ventilkörpers 13 in axial- und radial-Richtung aufweisen.

An dem Antriebs-Adapter-Flansch 21 kann eine Schraubverbindung zur Befestigung des Antriebs-Adapter-Flansches 21 an dem Ventilgehäuse 17 vorgesehen sein. Der Antriebs-Adapter-Flansch 21 kann mit einer Lagerung, vorzugsweise einer Gleitlagerung, zum axialen und/oder radial Halten der stirnseitigen Kugelhahn-Halbkugel 13ʺ ausgestaltet sein. Der Antriebs-Adapter-Flansch 21 umfasst vorzugsweise eine oder mehrere Aufnahmen für Dichtungen und einen Durchgang für eine Antriebswelle 22 zum Betätigen der Ventilglieder 13. Die Antriebswelle 22 erstreckt sich in das Ventilgehäuse 17 hinein und steht formschlüssig in Eingriff mit den Kugelhahn-Ventilgliedern 13. Insbesondere kann die stirnseitige Halbkugel 13‴ eine formschlüssige Aufnahme für ein Ende der Antriebswelle 22 aufweisen.

Die Kugelventil-Hälften 13′, 13ʺ und 13‴ sind bei der in Fig. 3a abgebildeten bevorzugten Ausführung als massive Vollkörper ausgebildet. Mit Ausnahme der Durchgangskanäle 15c, 15d und 15e und der Durchgangsbohrungen für die Befestigungsschrauben sowie eventuelle Rücksprünge zum Aufnehmen von Formschluss-Vorsprüngen anderer Kugelabschnitte sind sie massiv ohne Aussparungen gebildet. Ein derartig massiver und robuster Aufbau eignet sich besonders gut für Hochdruck- und/oder Hochtemperatur-Bedingungen, beispielsweise in einem Kernkraftwerk.

Es ist denkbar, dass für andere Anwendungsgebiete die Stellglieder eines Kugelhahnventils weniger massiv, beispielsweise in einer Leichtbau-Bauart, gebildet sind, oder sogar bloß aus Durchgangs-Kanal-Rohren mit Struktur- und/oder Verbindungs-Komponenten, wie Streben, Rippen oder dergleichen, gebildet sind.

Dichtelemente 16 können, beispielsweise im Niederdruckbereich (bspw. unter 40 bar, unter 100°C) eines Kernkraftwerkes, als Weichdichtungen, beispielsweise aus PTFE oder einem anderen geeigneten Kunststoff, gebildet sein. Für einen Hochtemperatur- und/oder Hochdruck-Bereich (bspw. über 40 bar, über 100°C) sind Dichtungen zu bevorzugen, die höheren Drucken und/oder Temperaturen standhalten, beispielsweise Metall-Dichtungen, Graphit-Dichtungen oder dergleichen.

Fig. 4 zeigt eine andere Ausführung eines erfindungsgemäßen Ventilblockes 2, der als Notschließ-Ventilblock ausgestaltet ist. Der Notschließ-Ventilblock 2 umfasst zwei starr miteinander verbundene, massive Kugelhahn-Ventilglieder 23, durch die jeweils ein Durchgangskanal 25 gebohrt ist. Bei dieser Ausführung kann sich der Durchgangskanal 25 geradlinig und rein radial erstrecken, also die Rotationsachse R kreuzend, quer durch den Mittelpunkt des Ventilglieds 23 erstrecken.

Bei dem in Fig. 4 dargestellten Notschließ-Ventilblock 2 sind die Kugelhahn-Ventilglieder einstückig mit der Antriebswelle 32 gefertigt, beispielsweise geschmiedet, gerollt, gewalzt und/oder spanabtragend aus einem Stück gefertigt.

Ein solcher Notschließ-Ventilblock 2 eignet sich beispielsweise gut als Notschließ-Ventilblock 2 zum sicheren fluidischen Abtrennen von Instrumentationsfingern (nicht dargestellt), damit keine radioaktiv kontaminierten Fluide, Gase und/oder Dämpfe aus einem Leck geschlagenen Instrumentationsfinger in die übrige Anlage vordringen können.

Zu diesem Zweck kann ein Notschließ-Ventilblock 2 nahe an einer inneren Hülle eines Reaktorkerns 1001 unmittelbar anschließend an die innere Hülle des Reaktorkerns oder sogar als Teil der Hülle des Reaktorkerns gebildet sein. Um hohe Drücke beispielsweise über etwa 40 bar und/oder hohe Temperaturen oberhalb von 200 °C, insbesondere 300-400 °C, sicher ertragen zu können, sind die Dichtungen 36 des Notschließ-Ventilblockes 2 vorzugsweise als Metalldichtungen gebildet. Die Metalldichtungen 36 werden mit einem hohen radialen Anpressdruck gegen die Kugelhahn-Ventil-Stellglieder 23 gedrückt, sodass an dem kugelförmigen Umfang des Kugelhahnventils 2 hohe Anpressdrücke und Reibkräfte auftreten. Die hohen Reibkräfte wirken in Form von Torsionskräften entgegen der auf die Stellwelle 32 aufgebrachten Stellkraft. Daher kann bevorzugt sein, weniger als fünf, vorzugsweise weniger als drei, insbesondere nur genau zwei Kugelhahn-Ventilglieder 23 an einer Stellwelle 32 auszubilden.

Die Kugelhahn-Ventilglieder 23 der Kugelhahn-Ventile 21a und 21b des Notschließventilblocks 2 sind vorzugsweise mit sich geradlinig hindurch erstreckenden Durchgangskanälen 25 ausgestaltet. Es ist denkbar, dass in Axialrichtung L zueinander versetzt und bezüglich der Drehachse R in einem Winkelversatz zueinander mehrere, beispielsweise zwei, Durchgangskanäle in einem einzigen Kugelhahn-Ventilglied vorgesehen sind (nicht näher dargestellt). Beispielsweise können zwei sich geradlinig durch den Mittelpunkt des Kugelhahn-Stellglieds 23 erstreckende Durchgangskanäle 25 vorgesehen sein, die in Axialrichtung über mehr als einen Kanaldurchmesser und/oder relativ zu der Drehachse R um 90° zueinander versetzt sind.

Das Gehäuse 37 des Notschließ-Ventilblocks 2 kann ähnlich dem Gehäuse 17 des oben beschriebenen Verteilerventilblockes 200 realisiert sein. Beispielsweise kann es aus einem insbesondere mehrteiligen Hülsenkörper 37 sowie an einem in Axialrichtung fußseitigen Ende angebrachten Verschlussdeckel und einem am gegenüberliegenden stirnseitigen Ende angebrachten Antriebs-Adapter-Ende 31 ähnlich den oben beschriebenen Flanschteilen 20, 21 zusammengesetzt sein. Die Endstücke 30, 31 sind vorzugsweise mit einer Axial- und/oder Radiallagerung für die Stellwelle 32 ausgestattet.

In einen mehrteiligen Hülsenkörper des Gehäuses 37 können in Radialrichtung Anschlussstücke und insbesondere Verteilerleitungssystem-Kanal-Anschlüsse angebracht, beispielsweise eingeschraubt sein.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 2: Notschließ-Ventilblock
- 11a, b, c, d: Kugelhahnventil
- 13, 13^{∗}, 13′, 13ʺ, 13‴: Stellglied
- 15c, d, e, c′, d′, e′, 25: Durchgangskanal
- 16: Dichtelement
- 17, 37: Gehäuse
- 18: Gewindebohrung
- 19: Leitungsverbinder
- 20: Verschlussflansch
- 21: Antriebs-Adapter-Flansch
- 21a, 21b: Kugelhahn-Ventilglied
- 22, 32: Antriebswelle
- 20: Speicherzweig
- 23: Ventilglied
- 31: Antriebs-Adapter-Ende
- 32: Stellwelle
- 100: Verteilersystem
- 110, 120, 130, 140: Leitungszweige
- 122: Abschnitt
- 123: Abschirmung
- 160: Mehrwege-Armatur
- 170: Verteilerventil
- 170C, d, e: Leitungsausgang
- 170A: Leitungseingang
- 171, 172, 173: Durchgangskanal
- 175: Aktor
- 200, 300, 400, 500: Verteilerventilblock
- 201, 202, 203; 301, 302, 303: Leitungseingang
- 401, 402, 403; 501, 502, 503: Leitungseingang
- 210, 220, 230: Rotationsstellventil
- 211, 221, 231: Leitungsausgang
- 212, 222, 232: Leitungsausgang
- 213, 223, 233: Leitungsausgang
- 220A: Leitungseingang
- 222: Ausgang
- 250: Aktor
- 1001: Reaktorkern
- 1010: Instrumentationsfinger
- A, B, F: Leitungseingang
- C, D, E: Leitungsausgang
- L: Längsachse
- R: Rotationsachse

## Patentansprüche

1. Ventilblock (2, 200, 300, 400, 500) für ein festkörperführendes Leitungssystem (100) einer prozesstechnischen Anlage, umfassend wenigstens zwei Rotationsstellventile, wobei die Rotationsstellventile je wenigstens einen Leitungseingang (A) und je wenigstens einen Leitungsausgang (C, D, E) aufweisen, sowie je ein drehbares Stellglied (13, 23) mit wenigstens einem Durchgangskanal (15c, 15d, 15e, 25), wobei in einer Öffnungsstellung des Stellglieds der Leitungseingang (A) mit dem Leitungsausgang (C, D, E) durch den Durchgangskanal (15c, 15d, 15e, 25) verbunden sind und wobei in einer Schließstellung das Stellglied (13, 23) den Leitungseingang (A) vom Leitungsausgang (C, D, E) trennt, wobei die wenigstens zwei Rotationsstellventile um dieselbe Rotationsachse (R) drehbar und die Stellglieder (13, 23) der wenigstens zwei Rotationsstellventile drehfest mit einander verbunden sind und wobei der Durchgangskanal (15c, 15d, 15e, 25) des ersten Rotationsstellventils relativ zu dem Durchgangskanal (15c, 15d, 15e, 25) des zweiten Rotationsstellventils in Axialrichtung (L) der Rotationsache (R) zu einander versetzt sind, **dadurch gekennzeichnet, dass** wenigstens eines der Rotationsstellventile wenigstens zwei Leitungseingänge (A, B, F) und wenigstens ein Stellglied (13, 23) mit wenigstens zwei Durchgangskanälen (15c, 15d, 15e, 25) aufweist, die jeweils einem der wenigstens zwei Leitungseingänge (A, B, F) zugeordnet sind.

2. Ventilblock (2, 200, 300, 400, 500) nach Anspruch 1, wobei in einer aktiven Öffnungsstellung der aktive Durchgangskanal (15c, 15d, 15e, 25) einen Leitungseingang (A, B, F) mit einem Leitungsausgang (C, D, E) verbindet.

3. Ventilblock (2, 200, 300, 400, 500) nach Anspruch 2, wobei der aktive Durchgangskanal (15c, 15d, 15e, 25) mit dem Leitungseingang (A, B, F) und/oder dem Leitungsausgang (C, D, E) querschnittsgleich, koaxial und/oder totvolumenfrei fluchtet.

4. Ventilblock (200, 300, 400, 500) nach einem der vorstehenden Ansprüche, wobei wenigstens eines der Rotationsstellventile ein Verteilerventil mit wenigstens einem Leitungseingang (A, B, F), wenigstens zwei Leitungsausgängen (C, D, E) und wenigstens zwei separate Durchgangskanälen (15c, 15d, 15e) ist, wobei das Verteilerventil eine erste aktive Öffnungsstellung aufweist, in der der erste Durchgangskanal (15d) den Leitungseingang (A) mit einem ersten Leitungsausgang (D) verbindet, und wobei das Verteilerventil eine zweite aktive Öffnungsstellung aufweist, in der ein zweiter Durchgangskanal (15c, 15e) den Leitungseingang (A) mit einem zweiten Leitungsausgang (C, E) verbindet.

5. Ventilblock (200, 300, 400, 500) nach Anspruch 4, wobei die Durchgangskanäle (15c, 15d, 15e) in derselben Ebene angeordnet sind.

6. Verteilerleitungssystem (100) für eine prozesstechnische Anlage mit wenigstens einem Ventilblock nach einem der vorstehenden Ansprüche.

7. Verteilerleitungssystem (100) nach Anspruch 6 mit wenigstens einem Ventilblock (2) nach einem der Ansprüche 1 bis 3, wobei die Leitungsausgänge (C, D, E) des Ventilblocks (2) in fluidischer Kommunikation mit einem inneren Hochdruckabschnitt stehen, beispielsweise einem Reaktorkernabschnitt (1001), und wobei die Leitungseingänge (A, B, F) des Ventilblocks (2) in fluidischer Kommunikation mit einem äußeren Niederdruckabschnitt stehen, beispielsweise einem Reaktoraußenbereichsabschnitt.

8. Verteilerleitungssystem (100) nach Anspruch 7, wobei der Ventilblock (2) als Notschließventilblock zum Abtrennen des inneren Hochdruckabschnitts von dem äußeren Niederdruckabschnitt realisiert ist.

9. Verteilerleitungssystem (100) nach Anspruch 8, wobei der Ventilblock (2) mehrere Rotationsstellventile umfasst, und wobei der Ventilblock weniger als 10 Leitungsausgänge (C, D, E) in fluidscher Kommunikation mit dem inneren Hochdruckabschnitt umfasst.

10. Verteilerleitungssystem (100) nach einem der Ansprüche 6 bis 9 mit wenigstens einem Verteilerventilblock (200) nach Anspruch 4 oder 5.

11. Verteilerleitungssystem (100) nach Anspruch 10 mit wenigstens einem zweiten Verteilerventilblock (300, 400, 500) nach Anspruch 4 oder 5, wobei der wenigstens eine zweite Verteilerventilblock (300, 400, 500) kaskadenartig mit dem ersten Verteilerventilblock (200) in Reihe geschaltet ist.

12. Verteilerleitungssystem (100) nach einem der Ansprüche 6 bis 11 mit wenigstens einem Verteilerventil (160) oder einem Verteilerventilblock nach Anspruch 4 oder 5, von dem wenigstens ein Leitungsausgang (D) in fluidischer Kommunikation mit einem Kugelmesstisch steht und von dem wenigstens ein anderer Leitungsausgang (C, D) in fluidischer Kommunikation mit einer Radionukliderntestation oder einer Radionuklidlagervorrichtung steht.

## Claims

1. Valve block (2, 200, 300, 400, 500) for a solid-state conducting line system (100) of a process technical plant, comprising at least two rotary control valves, wherein the rotary control valves each comprise at least one line input (A) and at least one line output (C, D, E) each, and a rotatable control member (13, 23) each with at least a through channel (15c, 15d, 15e, 25), wherein in an open position of the control member, the line input (A) is connected to the line output (C, D, E) through the through-channel (15c, 15d, 15e, 25), and wherein, in a closed position, the control member (13, 23) separates the line input (A) from the line output (C, D, E), wherein
the at least two rotary control valves are rotatable about the same rotation axis (R) and the control members (13, 23) of the at least two rotary control valves are non-rotatably connected to each other and wherein
the through channel (15c, 15d, 15e, 25) of the first rotary control valve relative to the through channel (15c, 15d, 15e, 25) of the second rotary control valve is offset to each other in the axial direction (L) of the rotation axis (R), **characterized in that** at least one of the rotary control valves comprises at least two line inputs (A, B, F) and at least one control member (13, 23) with at least two through-channels (15c, 15d, 15e, 25) which are each assigned to one of the at least two line inputs (A, B, F).

2. Valve block (2, 200, 300, 400, 500) according to claim 1, wherein in an active open position, the active through-channel (15c, 15d, 15e, 25) connects a line input (A, B, F) to a line output (C, D, E).

3. Valve block (2, 200, 300, 400, 500) according to claim 2, wherein the active through-channel (15c, 15d, 15e, 25) being aligned with the line input (A, B, F) and/or the line output (C, D, E) of the same cross-section, coaxially and/or without dead volume.

4. Valve block (200, 300, 400, 500) according to one of the preceding claims, wherein at least one of the rotary control valves is a distributor valve having at least one line input (A, B, F), at least two line outputs (C, D, E) and at least two separate through-channels (15c, 15d, 15e), the distributor valve having a first active open position, in which the first through channel (15d) connects the line input (A) to a first line output (D), and wherein the distributor valve has a second active open position in which a second through channel (15c, 15e) connects the line input (A) to a second line output (C, E).

5. Valve block (200, 300, 400, 500) according to claim 4, wherein the through-channels (15c, 15d, 15e) are arranged in the same plane.

6. Distribution line system (100) for a process technical plant, having at least one valve block according to one of the preceding claims.

7. Distribution line system (100) according to claim 6 with at least one valve block (2) according to one of the claims 1 to 3, wherein the line outputs (C, D, E) of the valve block (2) are in fluidic communication with an inner high-pressure section, and the line inputs (A, B, F) of the valve block (2) being in fluidic communication with an outer low-pressure section.

8. Valve block (200, 300, 400, 500) according to claim 7, wherein the valve block (2) is realized as an emergency closing valve block for separating the inner line system section from the outer line system section.

9. Distribution line system (100) according to claim 8, wherein the valve block (2) comprises a plurality of rotary control valves and wherein the valve block comprises less than 10 line outputs (C, D, E) in fluid communication with the inner high-pressure section.

10. Distribution line system (100) according to one of the claims 6 to 9 having at least one distributor valve block (200) according to claim 4 or 5.

11. Distribution line system (100) according to claim 10 with at least one second distributor valve block (300, 400, 500) according to claim 4 or 5, wherein the at least one second distributor valve block (300, 400, 500) is connected in a cascade-like manner in series with the first distributor valve block (200).

12. Distribution line system (100) according to one of the claims 6 to 11, having at least one distributor valve (160) or a distributor valve block according to claim 4 or 5, of which at least one line output (D) is in fluid communication with a ball measuring table and of which at least one other line output (C, D) is in fluid communication with a radionuclide harvesting station or a radionuclide bearing device.

## Revendications

1. Bloc de vannes (2, 200, 300, 400, 500) pour un système de conduits (100) transportant des corps solides d'une installation technique de procédés industriels, comprenant au moins deux vannes de régulation rotatives, sachant que les vannes de régulation rotatives comportent respectivement au moins une entrée de conduit (A) et au moins une sortie de conduit (C, D, E), et un organe de réglage rotatif (13, 23) avec au moins un canal de passage (15c, 15d, 15e, 25), sachant que dans une position d'ouverture de l'organe de réglage l'entrée de conduit (A) est reliée à la sortie de conduit (C, D, E) par le canal de passage (15c, 15d, 15e, 25) et sachant que dans une position de fermeture, l'organe de réglage (13, 23) sépare l'entrée de conduit (A) de la sortie de conduit (C, D, E), sachant qu'au moins deux vannes de régulation rotatives sont reliées pouvant tourner autour du même axe de rotation (R) et les organes de réglage (13, 23) d'au moins deux vannes de régulation rotatives sont reliés l'un à l'autre solidaires en rotation et sachant que le canal de passage (15c, 15d, 15e, 25) de la première vanne de régulation rotative par rapport au canal de passage (15c, 15d, 15e, 25) de la deuxième vanne de régulation rotative est décalé par rapport à l'autre en direction axiale (L) de l'axe de rotation (R)
**caractérisé en ce qu'**
au moins une des vannes de régulation rotatives comporte au moins deux entrées de conduit (A, B, F) et au moins un organe de réglage (13, 23) avec au moins deux canaux de passage (15c, 15d, 15e, 25), qui sont respectivement attribués à au moins une des deux entrées de conduit (A, B, F).

2. Bloc de vannes (2, 200, 300, 400, 500) selon la revendication 1, sachant que dans une position d'ouverture active, le canal de passage actif (15c, 15d, 15e, 25) relie une entrée de conduit (A, B, F) à une sortie de conduit (C, D, E).

3. Bloc de vannes (2, 200, 300, 400, 500) selon la revendication 2, sachant que le canal de passage actif (15c, 15d, 15e, 25) est aligné de façon identique en section, coaxialement et/ou sans volume mort avec l'entrée de conduit (A, B, F) et/ou la sortie de conduit (C, D, E).

4. Bloc de vannes (200, 300, 400, 500) selon l'une des revendications précédentes, sachant qu'au moins une des vannes de régulation rotatives est une vanne de distribution avec au moins une entrée de conduit (A, B, F), au moins deux sorties de conduit (C, D, E) et au moins deux canaux de passage séparés (15c, 15d, 15e), sachant que la vanne de distribution comporte une première position d'ouverture active dans laquelle le premier canal de passage (15d) relie l'entrée de conduit (A) à une première sortie de conduit (D) et sachant que la vanne de distribution comporte une deuxième position d'ouverture active dans laquelle un deuxième canal de passage (15c, 15e) relie l'entrée de conduit (A) à une deuxième sortie de conduit (C, E).

5. Bloc de vannes (200, 300, 400, 500) selon la revendication 4, sachant que les canaux de passage (15c, 15d, 15e) sont disposés dans le même plan.

6. Système de conduits de distribution (100) pour une installation technique de procédés industriels avec au moins un bloc de vannes selon l'une des revendications précédentes.

7. Système de conduits de distribution (100) selon la revendication 6 avec au moins un bloc de vannes (2) selon l'une des revendications 1 à 3, sachant que les sorties de conduit (C, D, E) du bloc de vannes (2) sont en communication fluidique avec une section intérieure à haute pression, par exemple une section de cœur de réacteur (1001) et sachant que les entrées de conduit (A, B, F) du bloc de vannes (2) sont en communication fluidique avec une section extérieure à basse pression, par exemple une section de zone extérieure de réacteur.

8. Système de conduits de distribution (100) selon la revendication 7, sachant que le bloc de vannes (2) est réalisé sous la forme d'un bloc de vannes à fermeture de secours pour séparer la section intérieure à haute pression de la section extérieure à basse pression.

9. Système de conduits de distribution (100) selon la revendication 8, sachant que le bloc de vannes (2) comprend plusieurs vannes de régulations rotatives et sachant que le bloc de vannes comprend moins de 10 sorties de conduit (C, D, E) en communication fluidique avec la section intérieure à haute pression.

10. Système de conduits de distribution (100) selon l'une des revendications 6 à 9 avec au moins un bloc de vannes de distribution (200) selon la revendication 4 ou 5.

11. Système de conduits de distribution (100) selon la revendication 10 avec au moins un deuxième bloc de vannes de distribution (300, 400, 500) selon la revendication 4 ou 5, sachant qu'au moins un deuxième bloc de vannes de distribution (300, 400, 500) est monté en série en cascade avec le premier bloc de vannes de distribution (200).

12. Système de conduits de distribution (100) selon l'une des revendications 6 à 11 avec au moins une vanne de distribution (160) ou un bloc de vannes de distribution selon la revendication 4 ou 5 duquel au moins une sortie de conduit (D) est en communication fluidique avec une table de mesure de boule et duquel au moins une autre sortie de conduit (C, D) est en communication fluidique avec un poste de collecte des radionucléides ou un dispositif de stockage de radionucléides.
